# EUROPÄISCHE PATENTSCHRIFT

(11) **EP 1 108 625 B1**
(45) Veröffentlichungstag und Bekanntmachung des Hinweises auf die Patenterteilung: **26.10.2005**
(21) Anmeldenummer: 00126573.5
(22) Anmeldetag: 12.12.2000
(51) Int. Cl.: B60R 21/20

(54) **Gassack-Modul mit Rastverbindung und nabentopfförmigem Aufnahmekörper**
Airbag module with snap-fit and hub-type receptacle
Module de coussin gonflable fixé par encliquetage, avec logement en forme de moyeu

(30) Priorität: 13.12.1999 DE 29921857 U
(43) Veröffentlichungstag der Anmeldung: 20.06.2001
(73) Patentinhaber: TRW Automotive Safety Systems GmbH, 63743 Aschaffenburg (DE)
(72) Erfinder: Lorenz, Christian, 63849 Leidersbach 3 (DE)
(74) Vertreter: Kitzhofer, Thomas

(56) Entgegenhaltungen:
- DE-A- 4 414 761
- DE-A- 19 730 837
- DE-C- 4 430 588
- US-A- 5 354 093
- US-A- 5 460 400
- US-A- 5 685 557

## Beschreibung

Die Erfindung betrifft ein Fahrzeuginsassen-Rückhaltesystem nach dem Oberbegriff des Anspruchs 1.

Gattungsgemäße Rückhaltesysteme sind aus der DE 44 30 588 C2 und der DE 197 30837A bekannt.

Gassack-Module in Lenkrädern haben üblicherweise eine Kunststoff-Abdeckung, die die Vorderseite, welche dem Fahrgastinnenraum zugeordnet ist, bilden. Aus Kostengründen werden die topfförmigen Modulabdeckungen nicht mit tragenden Modulabdeckungen geschraubt oder genietet. Vielmehr sind Rastverbindungen, die Befestigungslaschen aufweisen, vorgesehen, so daß nach dem Einsetzen des Gassacks in das Aufnahmegehäuse die Modulabdeckung nur auf das Aufnahmegehäuse aufgesetzt und gleichzeitig die Rastverbindung verriegelt wird. Beim Entfalten des Gassacks reißt die Abdeckung an der Vorderseite auf und schwenkt nach außen. Die zugeordnete Umfangswand der Abdeckung wird damit auch nach außen gebogen. Dies könnte dazu führen, daß sich die Rastverbindung löst. Um diesem Lösen entgegenzuwirken, ist es bekannt, ein separates Sicherungsblech vorzusehen, welches rückseitig mit dem Aufnahmegehäuse verschraubt wird. Dieses Sicherungsblech ist seitlich nahe der Seitenfläche des Moduls in Richtung Vorderseite gebogen und stützt die Umfangswand der Modulabdeckung, die sich nicht mehr so weit nach außen biegen kann, daß die Rastverbindung gelöst wird. Das Vorsehen eines Sicherungsblechs und dessen Montage erhöhen allerdings den Kostenaufwand. Das Sicherungsblech muß nicht unbedingt abgewinkelt sein, es sind auch andere Ausführungsformen denkbar.

Die Erfindung schafft ein Fahrzeuginsassen-Rückhaltesystem, bei dem die Rastverbindung zwischen den beiden Umfangswänden auf einfachere und kostengüstigere Weise gesichert wird. Dies wird durch ein Fahrzeuginsassen-Rückhaltesystem nach Anspruch 1 erreicht. Mit der Erfindung ist also kein separates, nur zum Zwecke der Sicherung der Rastverbindung vorgesehenes Blech mehr vorhanden, vielmehr wird der Bauraum um das Gassack-Modul im Lenkrad so ausgebildet, daß der den Bauraum definierende, ohnehin vorgesehene Aufnahmekörper die Sicherung bildet.

Bei der bevorzugten Ausführungsform ist die erste Umfangswand die seitlich äußere. Damit ist gewährleistet, daß der Gassack im gefalteten Zustand seitlich an das Aufnahmegehäuse anstoßen und eine größtmögliche Breite einnehmen kann.

Gemäß einer weiteren Ausgestaltung sind die Modulabdeckung aus Kunststoff und das Aufnahmegehäuse aus Blech, wobei natürlich auch das Aufnahmegehäuse aus Kunststoff sein kann.

Das Aufnahmegehäuse weist vorteilhafterweise seitlich in Ausnehmungen in der ersten Umfangswand ragende Rasthaken auf, die mit den Ausnehmungen die Rastverbindung bilden. Die Rasthaken können aber auch umgekehrt an der Umfangswand und die Ausnehmungen im Aufnahmegehäuse vorgesehen sein.

Gemäß einer anderen Ausgestaltung weitet sich der Aufnahmekörper vorzugsweise zur Vorderseite nach außen auf und erlaubt damit eine gewisses Biegen der Umfangswand der Modulabdeckung nach außen, wenn die Vorderseite der Modulabdeckung aufgerissen wird.

Vorzugsweise liegt der Aufnahmekörper im nicht entfalteten Zustand des Gassacks bereits an der äußeren Umfangswand an. Der Aufnahmekörper dient zudem der seitlichen Lagefixierung des Gassack-Moduls im Fahrzeug, er hat in diesem Fall also eine Doppelfunktion.

Weitere Merkmale und Vorteile der Erfindung ergeben sich aus den nachfolgenden Beschreibungen und aus den nachfolgenden Zeichnungen, auf die Bezug genommen wird. In den Zeichnungen zeigen:
Fig. 1 einen Längsschnitt durch eine Ausführungsform eines Fahrzeuginsassen-Rückhaltesystems, wobei die linke Hälfte und die rechte Hälfte Stand der Technik wiedergeben,
Fig. 2 eine vergrößerte Ansicht der bei der Erfindung einsetzbaren Rastverbindung gemäß einer Ausführungsform,
Fig. 3 eine vergrößerte Ansicht einer anderen, bei der Erfindung einsetzbaren Rastverbindung,
Figuren 4 bis 6 Längsschnitte durch Ausführungsformen des erfindungsgemäßen Rückhaltesystems, und
Figur 7 einen Längsschnitt durch eine nicht unter die Erfindung fallende Ausführungsform, die in Erläuterungszwecken enthalten ist.

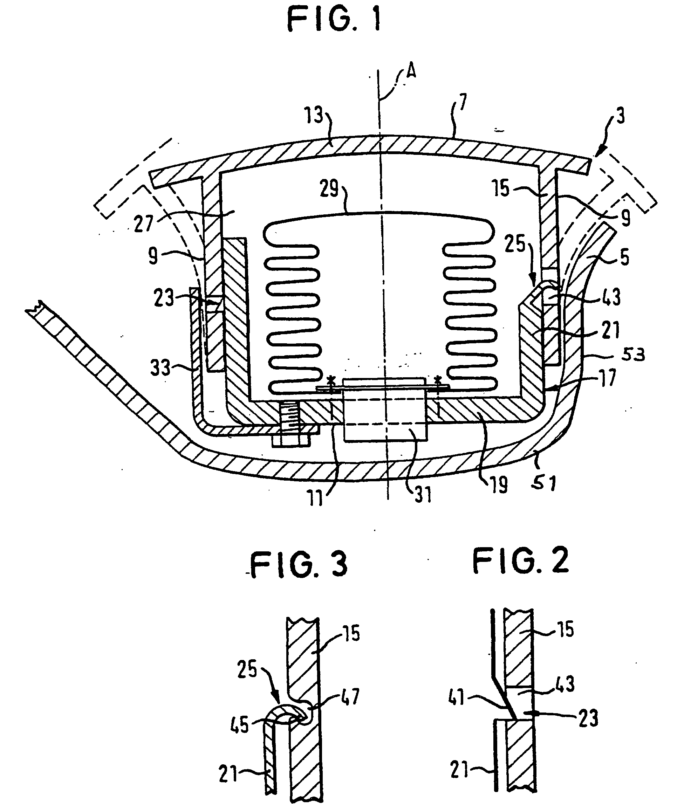

In Fig. 1 ist ein Fahrzeuginsassen-Rückhaltesystem dargestellt, das aus einem Gassack-Modul 3 und einem Aufnahmekörper 5 besteht. Der Aufnahmekörper 5 ist ein Nabentopf, beispielsweise eine topfförmig ausgebildete Nabe des Fahrzeuglenkrads. Der Aufnahmekörper kann aber auch ein Trägerblech im Bereich des Armaturenbrettes auf der Beifahrerseite, im Sitz, der Seitentür oder dem Dachrahmen sein. Der Nabentopf muß wie anhand der Erfindung spärter erläutert wird, nicht ausschließlich nur durch die Nabe des Lenkrads gebildet sein und muß auch nicht umfangsmäßig geschlossen sein, sondern es reicht aus, daß Speichenabschnitte, die Speichenumschäumung oder andere ohnehin vorgesehenen Teile nahe des Moduls 3 in Richtung zu einer Vorderseite 7 des Moduls ragen. Das Gassack-Modul umfaßt die schon erwähnte Vorderseite, eine Seitenfläche 9 und eine Rückseite 11. Das Gassack-Modul besteht ferner aus einer topfartigen Modulabdeckung 13 mit einer geschlossenen Umfangswand 15, die im folgenden erste Umfangswand genannt wird. Darüber hinaus besteht das Gassack-Modul aus einem vorzugsweise umgekehrt topfförmigen Aufnahmegehäuse 17 aus Blech. Dieses Aufnahmegehäuse 17 weist eine Rückwand 19 und eine Umfangswand 21, im folgenden zweite Umfangswand genannt, auf. Erste und zweite Umfangswand 15, 21 berühren einander und sind durch mehrere Rastverbindungen 23, 25 aneinander befestigt. Die Rastverbindungen sind so ausgebildet, daß ein Aufschieben der Modulabdeckung 7 auf das Aufnahmegehäuse 17 zwar möglich ist, nicht jedoch ein Abziehen der Modulabdeckung.

Die Seitenfläche 9 wird im oberen Bereich durch die Außenseite der ersten Umfangswand 15 und im unteren Bereich durch die Außenseite der Umfangswand 21 definiert. Modulabdeckung 7 und Aufnahmegehäuse 17 begrenzen einen Raum 27 zur Unterbringung eines Gassacks 29. Der Gassack 29 ist nur stilisiert dargestellt und liegt in der Praxis an der Umfangswand 21 an und füllt nahezu den gesamten Raum 27. Im Bereich der Rückwand 19 ist ein Gasgenerator 31 am Aufnahmegehäuse 17 angebracht.

Links von der Achse A ist ein Rückhaltesystem dargestellt, welches bereits bekannt ist. Da beim Entfalten des Gassacks die Modulabdeckung 7 vorderseitig reißt und nach außen schwenkt, wird auch die Umfangswand 15 nach außen gedrückt, wie mit unterbrochenen Linien angedeutet ist. Die Umfangswand 15 könnte dabei so weit nach außen geschwenkt werden, daß sich die Rastverbindung 23 löst. Um dies zu verhindern, ist ein topfförmiges Sicherungsblech 33 von unten an das Aufnahmegehäuse angeschraubt. Der zur Vorderseite 7 ragende Abschnitt des Sicherungsblechs liegt nahezu an der ersten Umfangswand 15 an und verhindert eine zu starke Biegung der Umfangswand 15 beim Entfalten des Gassacks.

Es ist zu erkennen, daß das Sicherungsblech 31 zusätzlichen Aufwand zur Herstellung und zu seiner Montage erfordert.

Bei der Ausführungsform, die in der rechten Hälfte von Fig. 1 dargestellt ist, entfällt das als separates Teil ausgebildete und am Gassack-Modul 3 befestigte Sicherungsblech. Der Aufnahmekörper (Nabentopf) 5 ist so geformt, daß er nahe an der Umfangswand 15, die die seitlich äußere der beiden Umfangswände 15, 21 bildet, verläuft, so daß er teilweise an ihr anliegt. Der Aufnahmekörper 5 bildet so eine Sicherung für die Modulabdeckung, deren Umfangswand 15 sozusagen zwischen der zweiten Umfangswand 21 und dem Aufnahmekörper 5 gehaltert ist. Für den Aufnahmekörper 5 ist kein separates Teil erforderlich, nur eine entsprechende Formgebung, deren Kosten jedoch nicht ins Gewicht fallen. Zudem ist der Aufnahmekörper 5, der fahrzeugseitig befestigt ist und ein Fahrzeug-Rahmenteil bildet, dasjenige fahrzeugfeste Teil, an dem das Gassack-Modul 3 arretiert ist. Bei der Ausführungsform nach Figur 1 ist der Aufnahmekörper eine topfförmige Nabe des Lenkrads mit einem Boden 51 und einer umfangsmäßig geschlossenen Seitenwand 53.

Es versteht sich, daß die beiden Umfangswände 15, 21 umfangsmäßig nicht geschlossen sein müssen, sondern daß auch entsprechende Abschnitte die erläuterten Funktionen erfüllen können. Ebenso muß auch der Aufnahmekörper 5 nicht zugleich der Befestigung des Gassack-Moduls 3 dienen. Vielmehr kann der Aufnahmekörper 5 auch aus mehreren benachbarten Teilen zusammengesetzt sein, wobei ein Teil zur Befestigung des Gassack-Moduls 3 dient und ein benachbartes Teil so nahe an der Umfangswand 15 plaziert ist, daß es als Sicherung dienen kann.

In den Figuren 2 und 3 sind verschiedene Formen der Rastverbindung dargestellt. Beide Rastverbindungen können natürlich bei der Erfindung eingesetzt werden. Die in Fig. 2 dargestellte Rastverbindung 23 besteht aus einem ausgestanzten und seitlich nach außen gebogenen hakenförmigen Fortsatz 41 als Teil der Umfangswand 21 sowie einer Ausnehmung 43 in der Umfangswand 15.

Die in Fig. 3 dargestellte Rastverbindung 25 hingegen besteht aus einem hakenförmig umgeformten oberen Randabschnitt 45 der Umfangswand 21 und einer entsprechenden, im Querschnitt ebenfalls hakenförmigen Ausnehmung 47 in der Umfangswand 15, wobei die Ausnehmung 47 aber nicht die Umfangswand 15 durchdringt.

In Fig. 1 ist in der rechten Hälfte zudem dargestellt, daß sich der Aufnahmekörper 5 zur Vorderseite 7 aufweitet und daß die Umfangswand 15 an dem nach außen aufgeweiteten oberen Abschnitt des Aufnahmekörpers 5 anliegt. Der Aufnahmekörper 5 stützt beim Entfalten des Gassacks die Umfangswand 15 seitlich ab und sichert dadurch die Rastverbindung 25 oder 23.

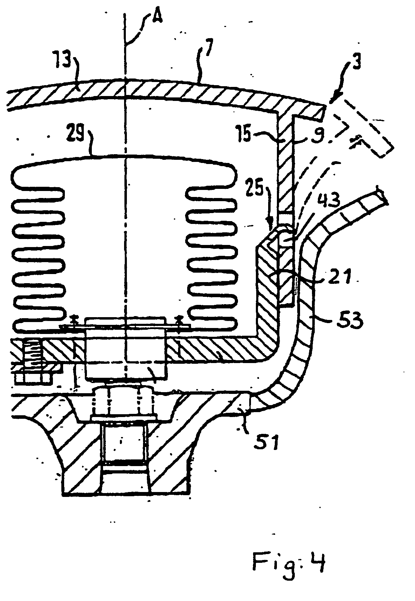

Bei den Ausführungsformen nach den Figuren 4 bis 7 werden für die bereits erläuterten Teile die bereits eingeführten Bezugszeichen verwendet. Ferner ist zur Vereinfachung nur die rechte Hälfte der Schnittansicht vollständig dargestellt.

Gemäß Figur 4 ist der Nabentopf aus dem Skelett des Lenkrads gebildet und zwar aus der Nabe, die den Boden 51 bildet, und dem Skelett der Speichen, die an der Nabe befestigt sind und die umfangsmäßig nicht geschlossene Seitenwand 53 bilden. Beim Öffnen des Moduls liegt die Seitenfläche 9 am Skelett der Speichen, d.h., an der Seitenwand 53 an.

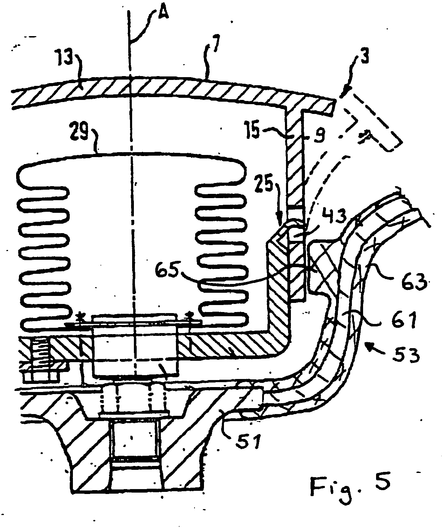

Figur 5 entspricht im wesentlichen Figur 4, wobei aber das Skelett 61 der Speichen eine Umschäumung 63 mit einem radial einwärts verlaufenden Vorsprung 65 als Anschlag für die äußere Umfangswand 15 hat.

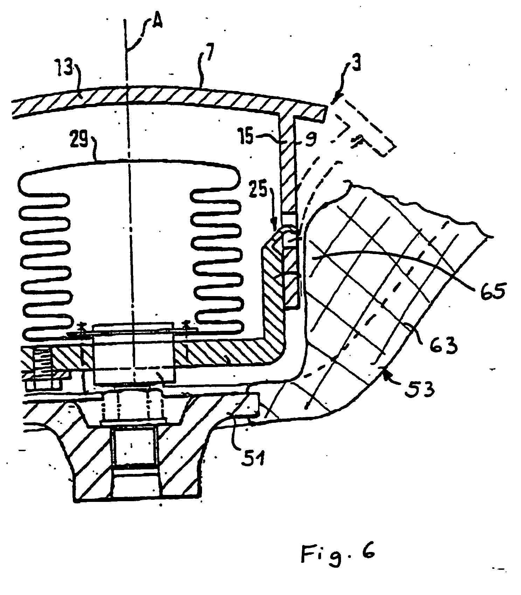

Bei der Ausführungsform nach Figur 6 liegt das Skelett der Speiche außerhalb der Schnittebene. Das Skelett ist mit einer Umschäumung 63 versehen, die dem Nabentopf eine in Umfangsrichtung geschlossene Gestalt gibt. Der Vorsprung 65, an dem die Umfangswand 15 anschlägt, liegt zwischen zwei Speichen.

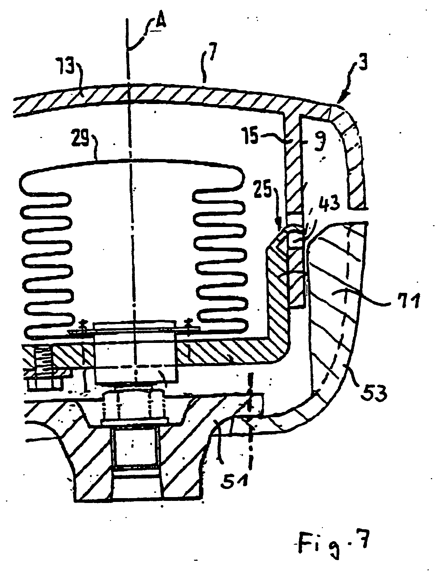

Bei der zu Erläuterungszwecken angeführten Ausführungsform nach Figur 7 werden der Boden 51 von der Nabe des Lenkrads und die Seitenwand 53 von einer Lenkradverkleidung in Form einer rückseitig an der Nabe angebrachten Kunststoffschale, an der sich die Umfangswand beim Öffnen des Moduls abstützt, gebildet. Eine Rippe 71 sichert die Umfangswand 15.

## Patentansprüche

1. Fahrzeuginsassen-Rückhaltesystem,
mit einem Gassack-Modul (3), welches
eine Vorderseite (7), eine Seitenfläche (9) und eine Rückseite (11) aufweist und ferner eine topfförmige Modulabdeckung (13) mit einer ersten Umfangswand (15) und ein Aufnahmegehäuse (17) mit einer zweiten Umfangswand (21) aufweist,
wobei Modulabdeckung (13) und Aufnahmegehäuse (17) einen Raum (27) zur Unterbringung eines Gassacks (29) als Teil des Moduls (3) definieren und
wobei die erste und die zweite Umfangswand (15, 21) durch eine Rastverbindung (23; 25) miteinander verbunden sind und wenigstens eine der Umfangswände (15, 21) die Seitenfläche (9) definiert,
und mit einem fahrzeugseitig befestigten Aufnahmekörper (5) für das Gassack-Modul (3) in Form eines Nabentopfes eines Fahrzeuglenkrads, das eine Nabe und Speichen aufweist,
wobei der Aufnahmekörper (5) so nahe an der Seitenfläche (9) angeordnet ist, daß er die seitlich äußere der beiden Umfangswände (15, 21) beim Öffnen des Gassack-Moduls (3) seitlich stützt und die Rastverbindung sichert,
**dadurch gekennzeichnet, daß** der Nabentopf durch die Nabe und die Speichen gebildet ist und daß sich die seitlich äußere der beiden Umfangswände beim Öffnen des Gassackmoduls an Speichen abstützt.

2. Fahrzeuginsassen-Rückhaltesystem nach Anspruch 1, **dadurch gekennzeichnet, daß** die erste Umfangswand (15) die seitlich äußere ist.

3. Fahrzeuginsassen-Rückhaltesystem nach Anspruch 1 oder 2 **dadurch gekennzeichnet, daß** die Modulabdeckung (13) aus Kunststoff und das Aufnahmegehäuse (17) aus Blech sind.

4. Fahrzeuginsassen-Rückhaltesystem nach einem der vorhergehenden Ansprüche, **dadurch gekennzeichnet, daß** das Aufnahmegehäuse (17) seitlich in Ausnehmungen (43; 47) in der ersten Umfangswand (15) ragende Rasthaken (41; 45) aufweist.

5. Fahrzeuginsassen-Rückhaltesystem nach einem der vorhergehenden Ansprüche, **dadurch gekennzeichnet, daß** der Aufnahmekörper (5) an der seitlich äußeren Umfangswand (15) im nicht entfalteten Zustand des Gassacks (29) anliegt.

6. Fahrzeuginsassen-Rückhaltesystem nach einem der vorhergehenden Ansprüche, **dadurch gekennzeichnet, daß** sich der Aufnahmekörper (5) zur Vorderseite nach außen aufweitet.

7. Fahrzeuginsassen-Rückhaltesystem nach einem der vorhergehenden Ansprüche, **dadurch gekennzeichnet, daß** die Speichen ein Skelett aufweisen und sich die äußere Umfangswand beim Öffnen des Gassackmoduls am Skelett der Speichen abstützt.

8. Fahrzeuginsassen-Rückhaltesystem nach einem der Ansprüche 1 bis 6, **dadurch gekennzeichnet, daß** die Speichen eine Umschäumung aufweisen und sich die äußere Umfangswand beim Öffnen des Gassackmoduls an der Umschäumung abstützt.

9. Fahrzeuginsassen-Rückhaltesystem nach Anspruch 8, **dadurch gekennzeichnet, daß** die Umschäumung einen sich zur äußeren Umfangswand erstreckenden Vorsprung als Anschlag für die äußere Umfangswand hat.

10. Fahrzeuginsassen-Rückhaltesystem nach Anspruch 8, **dadurch gekennzeichnet, daß** die Umschäumung dem Nabentopf eine in Umfangsrichtung geschlossene Gestalt gibt.

11. Fahrzeuginsassen-Rückhaltesystem nach einem der vorhergehenden Ansprüche, **dadurch gekennzeichnet, daß** der Aufnahmekörper ein Aufnahmeblech oder Befestigungsblech für die Armaturentafel oder ein umgeformtes Gestell eines Fahrzeugsitzes ist.

## Claims

1. A vehicle occupant restraint system,
comprising a gas bag module (3) which
includes a front side (7), a side face (9), and a rear side (11), and further includes a pot-shaped module cover (13) having a first peripheral wall (15) and an accommodation housing (17) having a second peripheral wall (21),
the module cover (13) and the accommodation housing (17) defining a space (27) for housing a gas bag (29) as part of the module (3), and
the first and second peripheral walls (15, 21) being connected with each other by a latching connection (23; 25) and at least one of the peripheral walls (15, 21) defining the side face (9),
and comprising a mounting body (5) for the gas bag module (3), the mounting body (5) being fixed on the side of the vehicle and being in the form of a hub pot of a vehicle steering wheel which has a hub and spokes,
the mounting body (5) being disposed so close to the side face (9) that it laterally supports the laterally outer one of the two peripheral walls (15, 21) upon opening of the gas bag module (3), and secures the latching connection,
**characterized in that** the hub pot is constituted by the hub and the spokes and that the laterally outer one of the two peripheral walls is supported by spokes upon opening of the gas bag module.

2. The vehicle occupant restraint system as claimed in claim 1, **characterized in that** the first peripheral wall (15) is the laterally outer one.

3. The vehicle occupant restraint system as claimed in claim 1 or 2, **characterized in that** the module cover (13) is made of plastics and the accommodation housing (17) is made of sheet metal.

4. The vehicle occupant restraint system as claimed in any of the preceding claims, **characterized in that** the accommodation housing (17) has latching hooks (41; 45) laterally protruding into recesses (43; 47) in the first peripheral wall (15).

5. The vehicle occupant restraint system as claimed in any of the preceding claims, **characterized in that** the mounting body (5) rests against the laterally outer peripheral wall (15) in the non-deployed condition of the gas bag (29).

6. The vehicle occupant restraint system as claimed in any of the preceding claims, **characterized in that** the mounting body (5) expands outwards towards the front side.

7. The vehicle occupant restraint system as claimed in any of the preceding claims, **characterized in that** the spokes include a skeleton and the outer peripheral wall is supported by the skeleton of the spokes upon opening of the gas bag module.

8. The vehicle occupant restraint system as claimed in any of claims 1 to 6, **characterized in that** the spokes have a foam casing and the outer peripheral wall is supported by the foam casing upon opening of the gas bag module.

9. The vehicle occupant restraint system as claimed in claim 8, **characterized in that** the foam casing has a protrusion extending towards the outer peripheral wall and serving as a stop for the outer peripheral wall.

10. The vehicle occupant restraint system as claimed in claim 8, **characterized in that** the foam casing gives the hub pot a shape which is closed in the peripheral direction.

11. The vehicle occupant restraint system as claimed in any of the preceding claims, **characterized in that** the mounting body is a mounting plate or attachment plate for the instrument panel or a reshaped frame of a vehicle seat.

## Revendications

1. Système de retenue de passager de véhicule,
comportant un module de coussin à gaz (3) qui présente
une face antérieure (7), une face latérale (9) et une face postérieure (11) et en outre un couvercle de module (13) en forme de pot, avec une première paroi périphérique (15), et un boîtier de réception (17) avec une deuxième paroi périphérique (21),
le couvercle de module (13) et le boîtier de réception (17) définissant un espace (27) pour loger un coussin à gaz (29) faisant partie du module (3) et
les première et deuxième parois périphériques (15, 21) étant reliées l'une à l'autre par une liaison à enclenchement (23 ; 25) et au moins une des parois périphériques (15,21) définissant la surface latérale (9),
et comportant un corps de réception (5), fixé côté véhicule, pour le module de coussin à gaz (3), sous forme d'un pot de moyeu d'un volant de direction qui présente un moyeu et des rayons,
le corps de réception (5) étant agencé si près de la face latérale (9) qu'il soutient latéralement celle des deux parois latérales (15, 21) qui est située latéralement à l'extérieur lorsque le module de coussin à gaz (3) s'ouvre, et qu'il assure la liaison à enclenchement,
**caractérisé en ce que** le pot de moyeu est formé par le moyeu et par les rayons et **en ce que** celle des parois périphériques qui est située à l'extérieur prend appui sur les rayons lorsque le module de coussin à gaz s'ouvre.

2. Système de retenue de passager de véhicule selon la revendication 1, **caractérisé en ce que** la première paroi périphérique (15) est celle qui est située à l'extérieur.

3. Système de retenue de passager de véhicule selon la revendication 1 ou 2, **caractérisé en ce que** le couvercle de module (13) est en matière plastique et le boîtier de réception (17) est en tôle.

4. Système de retenue de passager de véhicule selon l'une des revendications précédentes, **caractérisé en ce que** le boîtier de réception (17) présente des crochets d'enclenchement (41 ; 45) faisant saillie latéralement dans des évidements (43 ; 47) ménagés dans la première paroi périphérique (15).

5. Système de retenue de passager de véhicule selon l'une des revendications précédentes, **caractérisé en ce que** le corps de réception (5) est en appui sur la paroi périphérique (15) latéralement extérieure, à l'état non déployé du coussin à gaz (29).

6. Système de retenue de passager de véhicule selon l'une des revendications précédentes, **caractérisé en ce que** le corps de réception (5) s'évase vers l'extérieur vers la face antérieure.

7. Système de retenue de passager de véhicule selon l'une des revendications précédentes, **caractérisé en ce que** les rayons présentent un squelette et la paroi périphérique extérieure prend appui sur le squelette des rayons lorsque le module de coussin à gaz s'ouvre.

8. Système de retenue de passager de véhicule selon l'une des revendications 1 à 6, **caractérisé en ce que** les rayons présentent un enrobage de mousse et la paroi périphérique extérieure prend appui sur l'enrobage de mousse lorsque le module de coussin à gaz s'ouvre.

9. Système de retenue de passager de véhicule selon la revendication 8, **caractérisé en ce que** l'enrobage de mousse a une saillie s'étendant vers la paroi périphérique extérieure et servant de butée pour la paroi périphérique extérieure.

10. Système de retenue de passager de véhicule selon la revendication 8, **caractérisé en ce que** l'enrobage de mousse confère au pot de moyeu une configuration fermée en direction périphérique.

11. Système de retenue de passager de véhicule selon l'une des revendications précédentes, **caractérisé en ce que** le corps de réception est une tôle de réception ou une tôle de fixation pour le tableau de bord ou pour un cadre façonné d'un siège de véhicule.
